# EUROPÄISCHE PATENTANMELDUNG

(11) **EP 4 545 253 A1**
(43) Veröffentlichungstag der Anmeldung: **30.04.2025**
(21) Anmeldenummer: 24200821.7
(22) Anmeldetag: 17.09.2024
(51) Int. Cl.: B25H 3/00, B26B 29/02

(54) **TRAGVORRICHTUNG FÜR EIN WERKZEUG UND VORRICHTUNG UMFASSEND EINE TRAGVORRICHTUNG SOWIE EIN WERKZEUG**

(30) Priorität: 23.10.2023 DE 102023129074; 24.04.2024 DE 102024111545
(71) Anmelder: Martor KG, 42653 Solingen (DE)
(72) Erfinder: Rohrbach, Martin, 73571 Göggingen (DE); Henn, Kerry, 42697 Solingen (DE)
(74) Vertreter: Roche, von Westernhagen & Ehresmann

(57) **Zusammenfassung**

Die Erfindung betrifft eine Tragvorrichtung (10) für ein Werkzeug (22) umfassend eine Aufnahmevorrichtung (20) mit einem Aufnahmeraum (12) zur Aufnahme des Werkzeugs (22) sowie mit einer Haltevorrichtung (30) zur Lagerung und Befestigung der Aufnahmevorrichtung (20) an einem Basisteil (31).

Die Besonderheit besteht darin, dass der Aufnahmevorrichtung (20) eine Sperrvorrichtung (50) zugeordnet ist, die mittels einer Betätigung zwischen einer Sperrstellung und einer Freigabestellung bewegbar ist, mit welcher das Werkzeug in der Tragvorrichtung (10) lösbar verriegelbar ist.

## Beschreibung

Die Erfindung betrifft eine Tragvorrichtung für ein Werkzeug, insbesondere für ein Messer.

Eine solche Tragvorrichtung ist aus offenkundiger Vorbenutzung bekannt. Die Tragvorrichtung umfasst eine Aufnahmevorrichtung mit einem Aufnahmeraum zur Aufnahme eines Messers. Über eine Öffnung kann das Messer in den Aufnahmeraum eingeführt werden. Die Aufnahmevorrichtung umfasst eine Haltevorrichtung zur Halterung der Aufnahmevorrichtung an einem Kleidungsstück, wie z.B. an einem Gürtel. Das Messer kann in den Aufnahmeraum eingesteckt werden und aus diesem entnommen werden. Es ist nur lose in der Tragvorrichtung aufgenommen.

Bei handwerklichen Arbeiten kommt es nicht selten vor, dass Arbeitspositionen eingenommen werden, wobei die Öffnung zum Einführen des Werkzeugs in den Aufnahmeraum der Aufnahmevorrichtung nicht nach oben weist, die Aufnahmevorrichtung also nicht vertikal ausgerichtet ist. In diesem Fall oder auch bei einer sprunghaften Bewegung des Benutzers kann das Werkzeug aus der Aufnahmevorrichtung fallen. Die Tragvorrichtung kann z.B. auch relativ zu einer Befestigungsvorrichtung verstellbar, insbesondere drehbar sein, um die Aufnahmevorrichtung an bestimmte Körperhaltungen und Arbeitspositionen anzupassen. Auch in diesem Fall besteht die Gefahr des Herausfallens des Werkzeugs. Z.B. bei Arbeiten auf einem Gerüst kann das Werkzeug dann herunterfallen und andere Menschen verletzen oder verloren gehen. Darüber hinaus kann das Werkzeug beim Herausfallen den Benutzer verletzen.

Es war Aufgabe der Erfindung eine Tragvorrichtung zu schaffen, bei welcher das Werkzeug sicher in der Tragvorrichtung gehalten ist und eine Verletzung des Benutzers sowie Dritter sicher verhindert wird.

Die Aufgabe wurde gelöst durch eine Tragvorrichtung mit den Merkmalen des Anspruchs 1.

Die Tragvorrichtung für ein Werkzeug umfasst eine Aufnahmevorrichtung mit einem Aufnahmeraum und einer Einführöffnung zur wenigstens teilweisen Aufnahme des Werkzeugs in den Aufnahmeraum. Wenn sich das Werkzeug in seinem Sitz im Aufnahmeraum befindet, ragt z.B. ein Teil des Werkzeugs aus dem Aufnahmeraum heraus. Das Werkzeug kann dann zur Entnahme aus dem Aufnahmeraum leicht von dem Benutzer gegriffen werden. Eine Haltevorrichtung ist ausgebildet zur Verbindung der Aufnahmevorrichtung mit einer Befestigungsvorrichtung. Mittels der Befestigungsvorrichtung ist die Lagerung und Befestigung der Aufnahmevorrichtung z.B. an einem Kleidungsstück, wie einem Gürtel, oder an einer Halterung eines Möbels, wie z.B. einer Maschine möglich.

Der Aufnahmevorrichtung ist eine Sperrvorrichtung zugeordnet, die mittels einer Betätigung zwischen einer Sperrstellung und einer Freigabestellung bewegbar ist. Mit der Sperrvorrichtung ist das Werkzeug in der Tragvorrichtung lösbar verriegelbar. In der Sperrstellung greift ein Riegel derart in eine Bewegungsbahn zur Entnahme des Messers aus dem Aufnahmeraum, dass das Messer nicht aus dem Aufnahmeraum entfernt werden kann.

Mit der erfindungsgemäßen Tragvorrichtung ist kann das ungewollte Herausbewegen des Werkzeugs aus der Aufnahmevorrichtung sicher verhindert werden, wenn sich die Sperrvorrichtung in der Sperrstellung befindet. In der Freigabestellung ist ein leichtes Entnehmen des Werkzeugs aus dem Aufnahmeraum der Aufnahmevorrichtung möglich, weil kein Klemmen oder Rasten des Werkzeugs in der Aufnahmevorrichtung erforderlich ist. Eine Verletzung des Benutzers sowie Dritter sowie das Verlieren des Werkzeugs ist daher unmöglich.

Die Betätigung umfasst z.B. eine Taste, die wenigstens einen Betätigungsbereich aufweist, um die Sperrvorrichtung zwischen der Sperrstellung und der Freigabestellung zu bewegen. Die Taste ist z.B. an der Aufnahmevorrichtung angeordnet. Das Werkzeug weist z.B. lediglich einen Betätigungsbereich auf. Dann werden die Sperrstellung und die Freigabestellung über diesen einen Betätigungsbereich gesteuert. Z.B. versetzt einmaliges Betätigen des Betätigungsbereichs die Sperrvorrichtung aus der Freigabestellung in die Sperrstellung und nochmaliges Betätigen des Betätigungsbereichs die Sperrvorrichtung aus der Sperrstellung in die Freigabestellung.

Z.B. umfasst die Taste zwei Betätigungsbereiche, wobei ein erster Betätigungsbereich für die Betätigung der Sperrstellung und ein zweiter Betätigungsbereich für die Betätigung der Freigabestellung ausgebildet ist. Wenn separate Betätigungsbereiche zum Betätigen der Sperrstellung und der Freigabestellung vorhanden sind, besteht für den Benutzer kein Zweifel, in welchen Zustand er die Sperrvorrichtung durch Betätigen des jeweiligen Bereichs versetzt.

Die Taste ist z.B. durch translatorische Verlagerung und / oder durch Rotation zwischen der Sperrstellung und der Freigabestellung bewegbar. Auch eine gemischte Bewegung aus translatorischer Verlagerung und Rotation kommt in Betracht, um eine Verstellung der Taste vorzunehmen. Bei einer translatorischen Verlagerung wird die Taste z.B. parallel zu einer Wandfläche der Aufnahmevorrichtung verschoben oder alternativ senkrecht zu der Wandfläche bewegt. Bei einer rotatorischen Verstellung wird die Taste um eine Schwenkachse bewegt, die z.B. an der Aufnahme gelagert bzw. von dieser gebildet ist.

Die Taste ist z.B. in eine erste stabile Position und in eine zweite stabile Position bewegbar, wobei der ersten Position die Sperrstellung und der zweiten Position die Freigabestellung zugeordnet ist. Stabile Position bedeutet im Sinne der Erfindung, dass die Taste in der Position verbleibt, in welche sie eingestellt wurde. Z.B. kann ein zu überwindender Widerstand verhindern, dass sich die Taste unbeabsichtigt aus der eingestellten Position in eine andere Position bewegt. Z.B. weist die Aufnahme eine Struktur auf, welche in der Bewegungsbahn einer Gegenstruktur der Taste angeordnet ist, wenn die Taste zwischen der ersten Position und der zweiten Position verstellt wird. Die Struktur und / oder die Gegenstruktur sind flexibel verformbar, so dass die Gegenstruktur durch Überwindung der Verformungskraft die Struktur passieren kann.

Die stabilen Zustände der Taste in der Sperrstellung und in der Freigabestellung tragen zu einer erhöhten Sicherheit bei, weil der Benutzer das Werkzeug in der Freigabestellung ohne Weiteres in dem Aufnahmeraum der Aufnahmevorrichtung anordnen kann oder es dieser entnehmen kann. Während des Einführens oder Entnehmens aus dem Aufnahmeraum muss die Taste nicht betätigt werden. In der Sperrstellung ist gewährleistet, dass sich die Sperrvorrichtung nicht aus der Sperrstellung herausbewegt.

Die Taste ist z.B. in der Sperrstellung und / oder in der Freigabestellung verrastbar. Die Taste bewegt sich dann nicht ungewollt aus der eingestellten Position. Die Verrastung erfolgt durch eine Rastvorrichtung, die z.B. der Taste zugeordnete erste Rastmittel und der Aufnahmevorrichtung zugeordnete zweite Rastmittel umfasst.

Die Taste ist z.B. als zweiarmiger Hebel ausgebildet, wobei zwei Betätigungsbereiche durch eine Schwenkachse voneinander getrennt sind. Die Taste ist um die Schwenkachse zwischen der Sperrstellung und der Freigabestellung schwenkbar. Je nachdem, welcher Betätigungsbereich betätigt wird, schwenkt die Taste und bewegt sich in die Sperrstellung oder die Freigabestellung.

Ein erster Betätigungsbereich der Taste ist z.B. in Bezug auf einen zweiten Betätigungsbereich größer ausgebildet. Auf diese Weise kann der Benutzer die Betätigungsbereiche leichter erkennen und der jeweiligen Funktion zuordnen. Wenn z.B. der größere Betätigungsbereich der Sperrstellung zugeordnet ist, kann der Benutzer aufgrund der größeren Betätigungsfläche auch leichter in dem Aufnahmeraum sichern, weil diese Fläche leichter zu bedienen ist.

Beispielsweise ist die Taste auf einer Außenseite der Aufnahmevorrichtung angeordnet. Sowohl, wenn die Tragvorrichtung an einer Person getragen wird, als auch wenn die Tragvorrichtung an einem Möbel befestigt ist, ist mit diesen Merkmalen eine leichte und ergonomische Betätigung möglich, weil die Taste gut zugänglich ist.

Die Taste ist z.B. auf einer von der Haltevorrichtung abgewandten Außenseite angeordnet. Die von der Haltevorrichtung abgewandten Seiten sind die Seiten der Mantelfläche der Aufnahmevorrichtung, welche nicht die Haltevorrichtung aufweisen.

Die Taste ist z.B. mit ersten Sperrmitteln, z.B. mit einem Sperrstift, unmittelbar oder mittelbar verbunden, welche in eine Bewegungsbahn des Werkzeugs bewegbar sind, um die Bewegung des Werkzeugs in Demontagerichtung aus dem Aufnahmeraum zu verhindern. Die ersten Sperrmittel wirken mit zweiten Sperrmitteln des Werkzeugs zusammen, um das Werkzeug in dem Aufnahmeraum zu verriegeln. Wenn die Taste mittelbar mit den ersten Sperrmitteln verbunden ist, bewegt z.B. in Abhängigkeit der Position der Taste eine Mechanik die ersten Sperrmittel zwischen der Sperrstellung und der Freigabestellung. Ist die Taste unmittelbar mit den ersten Sperrmitteln verbunden, können diese z.B. an der Taste befestigt sein oder mit dieser einteilig ausgebildet sein. In diesem Fall werden die ersten Sperrmittel direkt durch die Bewegung der Taste mitbewegt. Die ersten Sperrmittel greifen derart in den Aufnahmeraum ein, dass das Werkzeug bei Bewegung in Demontagerichtung aus dem Aufnahmeraum der Aufnahmevorrichtung mit diesen kollidiert, so dass eine weitere Bewegung verhindert wird.

Wenigstens ein Bereich der ersten Sperrmittel ist z.B. durch eine Öffnung der Wand der Aufnahmevorrichtung in den Aufnahmeraum bewegbar. Die ersten Sperrmittel können z.B. in der Freigabestellung wenigstens teilweise außerhalb des Aufnahmeraums angeordnet sein und in der Sperrstellung wenigstens teilweise innerhalb des Aufnahmeraums angeordnet sein. Damit diese Bewegung von der einen in die andere Position ermöglicht wird, weist die Wand der Aufnahmevorrichtung z.B. die Öffnung auf, die von den ersten Sperrmitteln durchgriffen wird und in welcher diese bewegbar sind.

Beispielsweise weist die Aufnahmevorrichtung haptische Erkennungsmittel auf, um die Anordnung der Taste an der Aufnahmevorrichtung und / oder den jeweiligen Bereich zur Betätigung der Sperrstellung und der Freigabestellung durch Ertasten zu lokalisieren. Es ist dann möglich, die Taste an der Aufnahmevorrichtung zu ertasten, ohne die Tragvorrichtung anzuvisieren. Solche haptischen Erkennungsmittel können z.B. eine erhabene Umrandung der Taste oder eine durch Ertasten wiedererkennbare Struktur auf der Taste bzw. auf dem jeweiligen Bereich der Taste, z.B. Bereich zum Sperren oder Bereich zur Freigabe, sein.

Das Werkzeug ist z.B. als Messer ausgebildet oder umfasst ein Messer.

Gemäß einem zweiten Aspekt betrifft die Erfindung auch eine Vorrichtung umfassend eine Tragvorrichtung sowie ein Werkzeug.

Es war Aufgabe der Erfindung, eine Vorrichtung zu schaffen, welche eine einfache Handhabung der Sperrvorrichtung des Messers ermöglicht.

Die Aufgabe wurde gelöst durch eine Vorrichtung mit den Merkmalen des Anspruchs 15.

Die Vorrichtung umfasst eine Tragvorrichtung gemäß dem ersten Aspekt der Erfindung sowie ein Werkzeug. Die ersten Sperrmittel der Tragvorrichtung wirken mit einer Außenfläche des Werkzeugs zusammen und bilden eine Steuervorrichtung, mit welcher die Sperrvorrichtung steuerbar ist. Mit der Steuervorrichtung kann die Sperrvorrichtung derart gesteuert werden, dass diese z.B. in die Sperrstellung oder in die Freigabestellung verstellt wird. Z.B. umfassen die ersten Sperrmittel einen Vorsprung oder einen vorragenden Stift. Ein Bereich der ersten Sperrmittel gerät bei der Einführung des Werkzeugs, z.B. eines Messers, in Kontakt mit der Außenfläche. Die Ausbildung der Außenfläche steuert dann zusammen mit der Ausbildung des Stiftes die Bewegung der Sperrvorrichtung, insbesondere einer Taste der Sperrvorrichtung. Beispielsweise weist die Taste jeweils eine stabile Position für die Sperrstellung und für die Freigabestellung und dazwischen einen Totpunkt auf, über welchen die Taste hinwegbewegt werden muss, um die jeweils andere Position von Sperrstellung und Freigabestellung zu erreichen.

Gemäß einer Ausführungsform sind die ersten Sperrmittel und die Außenfläche derart ausgebildet, dass - wenn sich die Sperrvorrichtung in der Sperrstellung befindet - beim Einführen des Werkzeugs in den Aufnahmeraum, insbesondere in einen Aufnahmesitz des Aufnahmeraums, die Sperrvorrichtung in der Sperrstellung verbleibt und das Werkzeug verriegelt wird. Z.B. bewegt sich die Taste nur soweit aus der Sperrstellung heraus, dass das Werkzeug die ersten Sperrmittel passieren kann und diese sich dann mit den zweiten Sperrmitteln des Werkzeugs in Eingriff bewegen können, so dass das Werkzeug in dem Aufnahmeraum verriegelt ist. Ein zwischen der Sperrstellung und der Freigabestellung ausgebildeter Totpunkt wird dabei z.B. nicht überwunden.

Alternativ zu der in dem vorherigen Absatz beschriebenen Ausführung oder zusätzlich dazu sind die ersten Sperrmittel und die Außenfläche derart ausgebildet, dass - wenn sich die Sperrvorrichtung in der Freigabestellung befindet - beim Einführen des Werkzeugs in den Aufnahmeraum die Sperrvorrichtung in die Sperrstellung bewegt und das Werkzeug verriegelt wird. Z.B. wirkt ein anderer Bereich der Außenfläche mit den ersten Sperrmitteln zusammen. In diesem Fall wird z.B. die Taste über einen Totpunkt hinweg aus der Freigabestellung in eine Sperrstellung bewegt.

Gemäß einer zu den vorher beschriebenen Ausführungen alternativen Ausführung sind die ersten Sperrmittel und die Außenfläche derart ausgebildet, dass beim Einführen des Werkzeugs in den Aufnahmeraum die Sperrvorrichtung aus der Sperrstellung in die Freigabestellung bewegt wird. Nach dieser Ausführung wird die Sperrvorrichtung beim Einführen des Messers in den Aufnahmeraum automatisch aus der Sperrstellung in die Freigabestellung bewegt, so dass das Werkzeug anschließend durch Betätigung der Taste verriegelbar ist. Befindet sich die Sperrvorrichtung in der Freigabestellung, hat das Einführen des Werkzeugs keine Auswirkung auf die Stellung der Sperrvorrichtung.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Es zeigen
Fig. 1a eine Frontansicht der Tragvorrichtung,
Fig. 1b die Frontansicht gemäß Fig. 1a, wobei ein Messer in der Tragvorrichtung gehaltert ist,
Fig. 2 eine Ansicht gemäß Ansichtspfeil B in Fig. 1a,
Fig. 3 eine Ansicht gemäß Ansichtspfeil C in Fig. 1a,
Fig. 4 eine Explosionsdarstellung der Tragvorrichtung,
Fig. 5a eine Frontansicht eines Basisteils der Haltevorrichtung in Einzelteildarstellung,
Fig. 5b eine Ansicht gemäß Ansichtspfeil J in Fig. 5a,
Fig. 5c eine Ansicht gemäß Ansichtspfeil K in Fig. 5a,
Fig. 5d eine Ansicht gemäß Ansichtspfeil L in Fig. 5a,
Fig. 5e eine Schnittansicht gemäß Schnittlinie I - I in Fig. 5a,
Fig. 5f eine perspektivische Ansicht des Basisteils,
Fig. 6 eine Rückansicht der Aufnahmevorrichtung der Tragvorrichtung ohne die Haltevorrichtung,
Fig. 7 eine Schnittansicht gemäß Schnittlinie D - D in Fig. 6,
Fig. 8 eine vergrößerte Darstellung des Ausschnitts E in Fig. 7,
Fig. 9 eine Schnittansicht gemäß Schnittlinie A - A in Fig. 1,
Fig. 10 eine vergrößerte Darstellung des Ausschnitts N in Fig. 9,
Fig. 11 eine vergrößerte Darstellung des Ausschnitts M in Fig. 9,
Fig. 12 eine Rückansicht der Tragvorrichtung wobei die Aufnahmevorrichtung eine erste Winkelposition relativ zu der Haltevorrichtung aufweist,
Fig. 13 eine Rückansicht der Tragvorrichtung wobei die Aufnahmevorrichtung eine zweite Winkelposition relativ zu der Haltevorrichtung aufweist,
Fig. 14 eine Rückansicht der Tragvorrichtung wobei die Aufnahmevorrichtung eine dritte Winkelposition relativ zu der Haltevorrichtung aufweist,
Fig. 15 eine Ansicht gemäß Ansichtspfeil R in Fig. 14,
Fig. 16 eine perspektivische Darstellung der Tragvorrichtung, wobei eine Taste einer Sperrvorrichtung in einer Sperrstellung angeordnet ist,
Fig. 17 eine perspektivische Darstellung der Tragvorrichtung in Anlehnung an Fig. 16, wobei die Taste in einer Freigabestellung angeordnet ist,
Fig. 18a eine Frontansicht der Tragvorrichtung in der Sperrstellung,
Fig. 18b ein Ausschnitt gemäß Ausschnittlinie T in Fig. 18a,
Fig. 19 eine Schnittansicht gemäß Schnittlinie O - O in Fig. 18a,
Fig. 20 eine Schnittansicht gemäß Schnittlinie P - P in Fig. 1b,
Fig. 21 eine vergrößerte Darstellung des Ausschnitts Q in Fig. 20,
Fig. 22 eine Schnittdarstellung gemäß Schnittlinie S - S in Fig. 20,
Fig. 23 eine Seitenansicht in Anlehnung an Fig. 2, wobei ein Scharnierteil der Befestigungsvorrichtung in einer Offenposition angeordnet ist,
Fig. 24 eine perspektivische Darstellung der Tragvorrichtung gemäß Fig. 23,
Fig. 25 eine Frontansicht einer besonderen Ausführung der Tragvorrichtung mit einem Werkzeug in Form eines Messers, wobei ein vorderer Teil des Werkzeugs in Form eines Messers in einen Aufnahmeraum der Aufnahmevorrichtung eingeführt ist,
Fig. 26 eine Schnittansicht gemäß Schnittlinie XXVI - XXVI in Fig. 25,
Fig. 27 eine Schnittdarstellung in Anlehnung an Fig. 26 wobei das Werkzeug 22 weiter in Richtung z2 in den Aufnahmeraum bewegt ist,
Fig. 28 eine Schnittdarstellung in Anlehnung an Fig. 27, wobei das Werkzeug 22 sich vollständig in dem Haltesitz in dem Aufnahmeraum befindet.

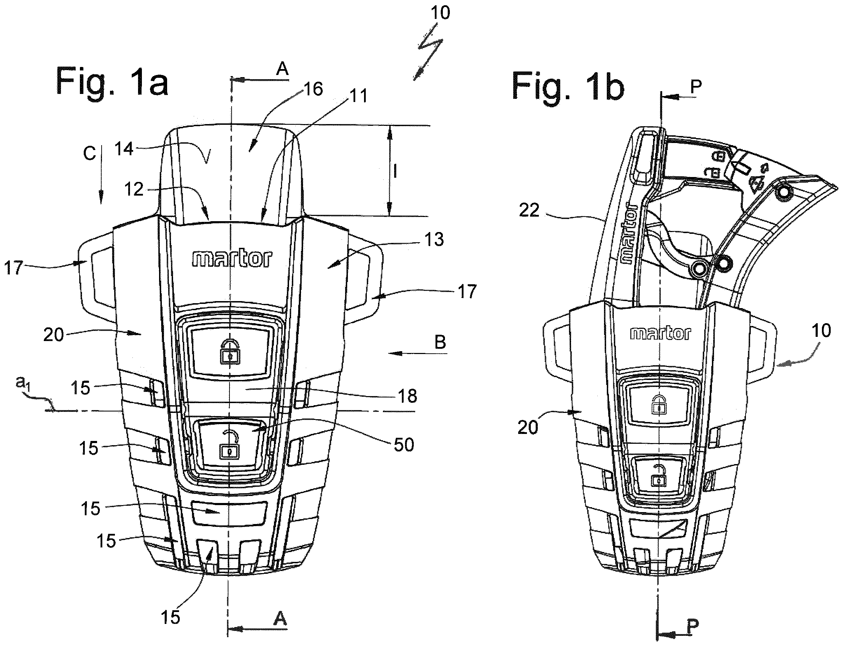

Eine Tragvorrichtung insgesamt ist in den Fig. mit dem Bezugszeichen 10 bezeichnet. In Fig. 1a ist eine Frontansicht der Tragvorrichtung 10 dargestellt. Die Tragvorrichtung 10 dient der Aufnahme eines Werkzeugs 22, hier in Form eines Messers, wie in Fig. 1b gezeigt. Die Tragvorrichtung 10 umfasst eine Aufnahmevorrichtung 20, eine Haltevorrichtung 30 sowie eine Verriegelungsvorrichtung 40.

Die Aufnahmevorrichtung 20 ist gehäuseartig ausgebildet und weist einen Aufnahmeraum 12 auf, welcher von einer Wand 13 begrenzt ist. Über eine obere Öffnung 11 kann das Werkzeug 22 in den Aufnahmeraum 12 eingesetzt und wieder entnommen werden. Ein Wandbereich 16 bildet eine Führungsfläche 14 aus, welche das Werkzeug 22 in den Aufnahmeraum führt. Ein oberes Ende der Wand 16 überragt einen oberen Rand der Öffnung 11 mit einer Länge I.

Öffnungen 15 in der Wand 13 vermitteln optisch eine leichte Erscheinung der Tragvorrichtung 10 und ermöglichen den Austritt von Schmutzpartikeln, die in den Aufnahmeraum 12 gelangt sind. Befestigungsmittel in Form von Ösen 17 erlauben die Befestigung eines nicht dargestellten Kabels oder Bandes, welches andererseits mit dem Messer 22 verbunden ist oder die Befestigung anderer Gegenstände an der Tragvorrichtung 10. Die Wand 13 ist derart ausgebildet, dass die Berührung einer Schneide des Werkzeugs 22 und damit eine Verletzung nicht möglich ist, wenn sich das Werkzeug 22 in dem Aufnahmeraum 12 befindet. Die Aufnahmevorrichtung 20 ist z.B. im Wesentlichen aus Kunststoff ausgebildet. Auch z.B. Metall und Verbundkunststoffe können für die Aufnahmevorrichtung 20 eingesetzt werden.

Zur Sicherung der Messers 22 in dem Aufnahmeraum 12 gegen unbeabsichtigtes Herausfallen, weist die Tragvorrichtung 10 im vorliegenden Ausführungsbeispiel eine Sperrvorrichtung 50 auf. Diese umfasst eine Taste 18, mit welcher die Sperrvorrichtung 50 zwischen einer Sperrstellung und einer Freigabestellung schaltbar ist. In der Sperrstellung ist das Werkzeug 22 in dem Aufnahmeraum 12 gesichert und in der Freigabestellung ist das Werkzeug 22 aus dem Aufnahmeraum 12 entnehmbar. Im vorliegenden Ausführungsbeispiel ist die Taste 18 als Wipptaste ausgebildet, die zwischen der Sperrstellung und der Freigabestellung verstellbar ist. Alternativ kommen aber auch andere Betätigungen in Betracht. Die Sperrvorrichtung 50 wird weiter unten noch genauer erläutert.

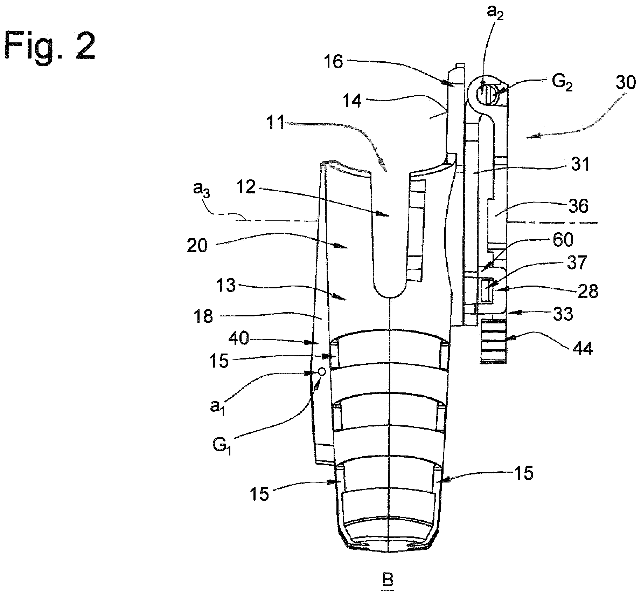

In Fig. 2 ist die Tragvorrichtung 10 in einer Seitenansicht gezeigt. Es ist ein Basisteil 31 erkennbar, welches ein Teil einer Haltevorrichtung 30 sowie Teil einer Befestigungsvorrichtung 60 z.B. zur Befestigung der Aufnahmevorrichtung 20 an einem Kleidungsstück des Benutzers oder an einem Möbel ist. Die Aufnahmevorrichtung 20 ist mittels der in Fig. 2 nicht vollständig erkennbaren Haltevorrichtung 30 lösbar an dem Basisteil 31 befestigt und um eine Schwenkachse a3 schwenkbar an dem Basisteil 31 gelagert. Die Lagerung ist in diesem Beispiel als Gleitlager ausgebildet. Alternativ könnten andere Lager eingesetzt werden. Ein Gleitlager bietet aber in diesem Fall die Möglichkeit einer einfachen Lösbarkeit der Aufnahmevorrichtung 20 von dem Basisteil 31 und verursacht lediglich geringe Kosten.

In diesem Ausführungsbeispiel ist die Aufnahmevorrichtung 30 relativ zu dem Basisteil 31 um 360° schwenkbar. Alternativ könnte der Schwenkradius aber begrenzt sein.

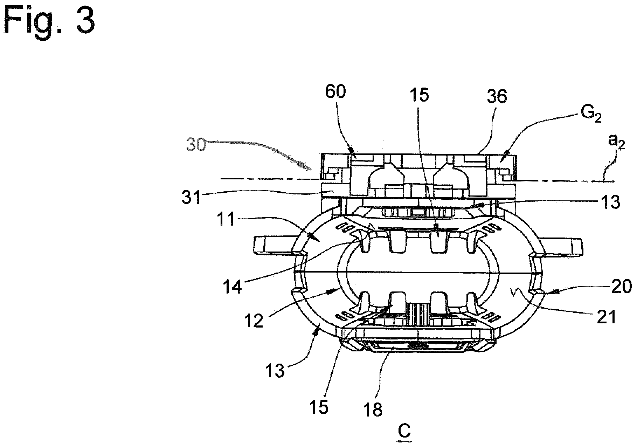

Fig. 3 zeigt eine Draufsicht auf die Tragvorrichtung bei welcher der Aufnahmeraum 12 durch die Öffnung 11 erkennbar ist. Es sind die Öffnungen 15 am Boden der Aufnahmevorrichtung 20 erkennbar, durch welche Schmutzpartikel aus dem Aufnahmeraum 12 heraus gelangen können.

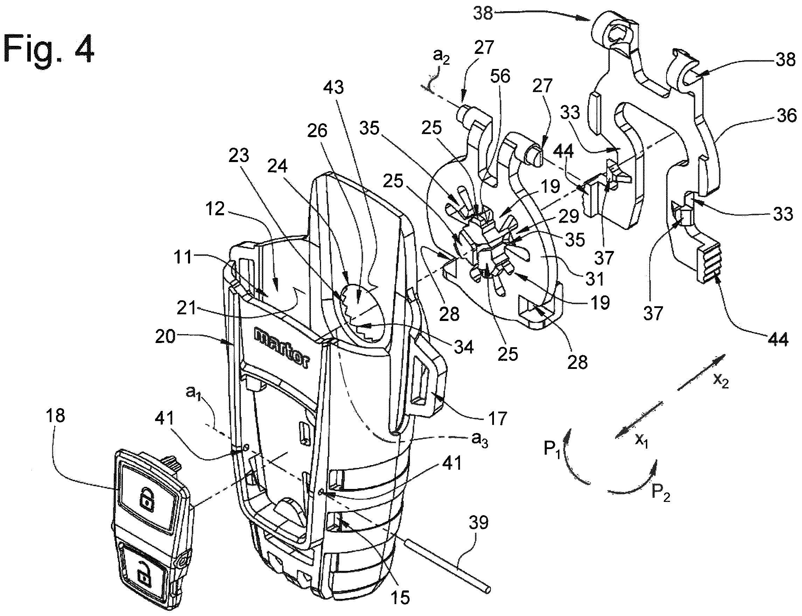

Fig. 4 zeigt eine Explosionsdarstellung der Tragvorrichtung 10. In Fig. 4 sind die Taste 18, die Aufnahmevorrichtung 20, das Basisteil 31 sowie ein Schließteil 36 erkennbar. Das Basisteil 31 weist zweite Haltemittel 25 auf, die mit ersten Haltemitteln 24 der Aufnahmevorrichtung zusammenwirken, um eine lösbare Befestigung und eine drehbare Lagerung zu gewährleisten. Die ersten Haltemittel 24 sind von einer Randfläche 43 einer Aussparung 26 in der Wand 13 der Aufnahmevorrichtung 20 gebildet. Die Randfläche 43 ist Teil einer Innenfläche 21 der Aufnahmevorrichtung 20. Anders ausgedrückt, die Randfläche 43 umgibt die Aussparung 26 und verhindert zusammen mit Hakenvorsprüngen 42 des Basisteils 31 ein Lösen des Basisteils 31 von der Aufnahmevorrichtung 20.

In diesem Ausführungsbeispiel sind die zweiten Haltemittel 25 in Form von drei separaten Blöcken 46 gebildet, die von dem plattenförmigen Basisteil 31 in Richtung x1 zu der Aufnahmevorrichtung 20 vorspringen, wobei jeder Block 46 an einem Endbereich wenigstens eines Federstegs 19 gelagert ist, der elastisch verformbar ist. Jeder Block 46 kann auf diese Weise entgegen der elastischen Federkraft des Federstegs 19 radial nach innen bewegt werden. Zwischenräume zwischen den Blöcken 46 ermöglichen die Bewegung radial nach innen. Eine Lagerfläche 56 aller drei Blöcke 46 ergibt gemeinsam die Form eines Kreiszylinders, welche dafür bestimmt ist, die Aussparung 26 zu durchgreifen und eine gemeinsame Lagerfläche für die Drehlagerung zu bilden. Die Anzahl der Blöcke wurde hier beispielhaft gewählt. Es könnten alternativ auch z.B. 2 oder 4 Blöcke 46 vorhanden sein, deren Lagerflächen 56 eine gemeinsame Lagerfläche zur Drehlagerung der Aufnahmevorrichtung 20 bilden.

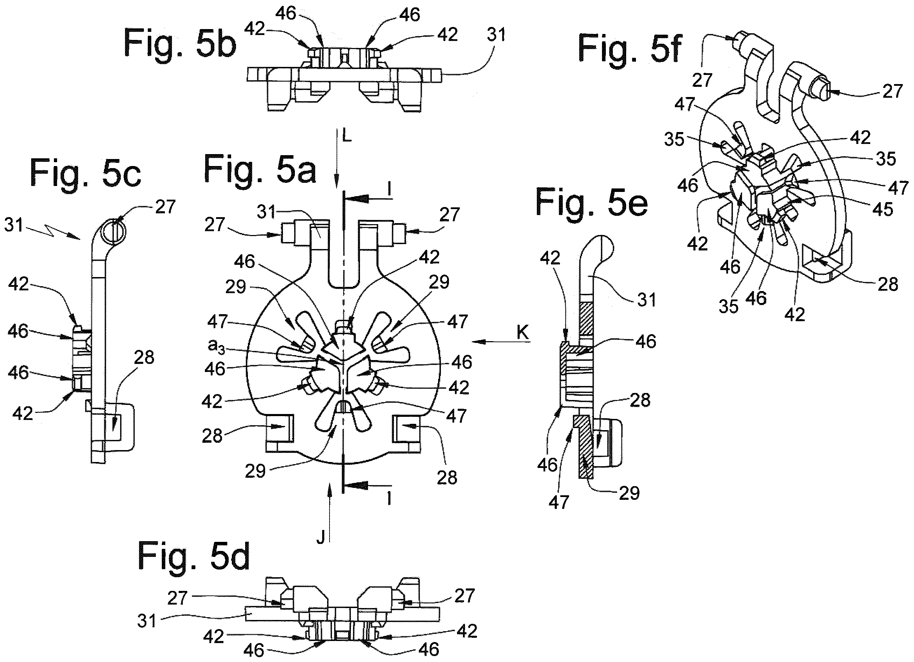

Jeder Block 46 ist mit dem Hakenvorsprung 42 (siehe Fig. 5a) versehen, der radial von einem freien Endbereich jedes Blocks 46 nach außen ragt. Bei einer elastischen Bewegung jedes Blocks 46 nach innen, können die Blöcke 46 bei einer Montage der Aufnahmevorrichtung 20 an dem Basisteil 31 durch die Aussparung 26 in Richtung x1 geführt werden. Bei Entlastung bewegen sich die Blöcke radial nach außen, wobei jeder Hakenvorsprung 42 die Randfläche 43 der Aussparung 26 auf einer dem Basisteil 31 gegenüberliegenden Seite der Wand 13 übergreift. Wenn das der Fall ist, kann das Basisteil 31 nicht in Richtung x2 bewegt und von der Aufnahmevorrichtung 20 gelöst werden. Die Drehbarkeit der Aufnahmevorrichtung 20 relativ zu dem Basisteil 31 in die Richtungen p1 und p2 ist aufgrund des Zusammenwirkens der Lagerfläche 56 mit der Laibung 23 gewährleistet.

Schrägflächen auf den Hakenvorsprüngen 42 unterstützen während der Montage des Basisteils 31 in Richtung x1 relativ zu der Aufnahmevorrichtung 20 die radiale Bewegung einwärts, wenn diese mit der Laibung 23 der Aussparung 26 in Kontakt geraten. Zur Demontage des Basisteils 31 können die Blöcke 46 durch Druck auf deren gemeinsames Zentrum (Schwenkachse a3) radial einwärts bewegt und danach die Haltemittel 25 in Richtung x2 von der Aufnahmevorrichtung 20 gelöst werden. Diese Lösbarkeit der Aufnahmevorrichtung 20 von dem Basisteil 31 ermöglicht und vereinfacht eine Reinigung der Tragvorrichtung 10.

An der Lagerfläche 56 weist jeder der drei Blöcke 46 sich in Richtung parallel zu der Schwenkachse a3 erstreckende Stegvorsprünge 45 auf. Diese stehen - wenn sich die ersten Haltemittel 24 mit den zweiten Haltemitteln 25 in Eingriff befinden - mit der Laibung 23 der Aussparung 26 in Kontakt und bilden mit dieser zusammen ein Gleitlager zur drehbaren Lagerung der Aufnahmevorrichtung 20 relativ zu dem Basisteil 31 in die Richtungen p1 und p2 um die Schwenkachse a3.

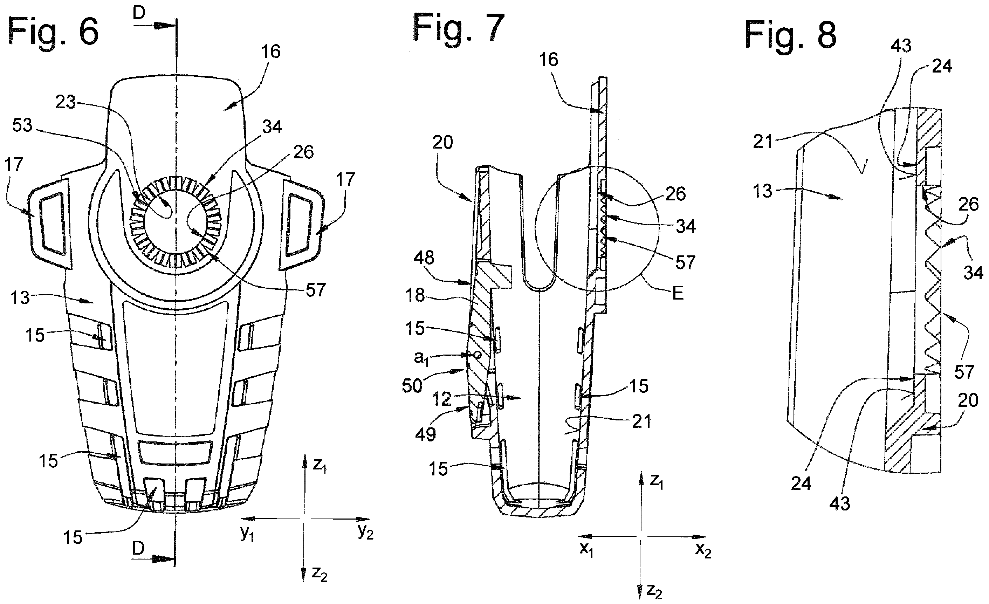

Die Verriegelungsvorrichtung 40 der Tragvorrichtung 10 ist ausgebildet, um die eingestellte Drehposition der Aufnahmevorrichtung 20 relativ zu dem Basisteil 31 zu sichern. Die Verriegelungsvorrichtung 40 weist erste Riegelmittel 34 auf (siehe die Fig. 6 bis 11), die der Aufnahmevorrichtung 20 zugeordnet sind und zweite Riegelmittel 35 auf, die dem Basisteil 31 zugeordnet sind. Die zweiten Riegelmittel 35 (siehe auch die Fig. 5a bis 5f) weisen in diesem Ausführungsbeispiel einen sich in Richtung x1 erstreckenden Zahnvorsprung 47 auf, der zu den ersten Riegelmitteln 34 gerichtet ist.

Der Zahnvorsprung 47 ist an einem freien Endbereich eines Federstegs 29 ausgebildet, der in der Ebene des plattenförmigen Basisteils 31 freigestellt ist. Im vorliegenden Beispiel weisen die zweiten Riegelmittel drei Zahnvorsprünge 47 auf, die um die Drehachse a3 verteilt um 120° versetzt angeordnet sind. Es kann alternativ eine andere Anzahl an Zahnvorsprüngen 47 gewählt werden. Die zweiten Riegelmittel 35 sind in der vorliegenden Konstruktion, in Bezug auf die zweiten Haltemittel 25 radial außerhalb zu der Drehachse a3 angeordnet, was vorteilhaft hinsichtlich einer platzsparenden Bauweise ist.

In Fig. 6 ist eine rückwärtige Ansicht der Aufnahmevorrichtung 20 dargestellt. Es ist erkennbar, dass die ersten Riegelmittel 34 von einer Verzahnung 57 gebildet sind, welche die Aussparung 26 umgibt oder mit anderen Worten an einem dem Basisteil 31 zugewandten Randbereich 53 der Aussparung 26 ausgebildet ist. Im vorliegenden Beispiel ist die Verzahnung über einen Winkel von 360° bezogen auf die Drehachse a3 ausgebildet. Das ermöglicht eine Verriegelung in allen Drehstellungen der Aufnahmevorrichtung 20 relativ zu dem Basisteil 31 über einen Winkel von 360°. Wenn eine geringere Verstellmöglichkeit der Aufnahmevorrichtung 20 gewünscht ist, können die ersten Riegelmittel 34 auch lediglich auf einem geringeren Winkel ausgebildet sein, z.B. 90° von der Senkrechten in beide Drehrichtungen p1 und p2.

In den Fig. 7 und 8 ist erkennbar, dass die Verzahnung 57 wenig Bauraum in Anspruch nimmt und die Erstreckung in Richtung x1 und x2 gering ist.

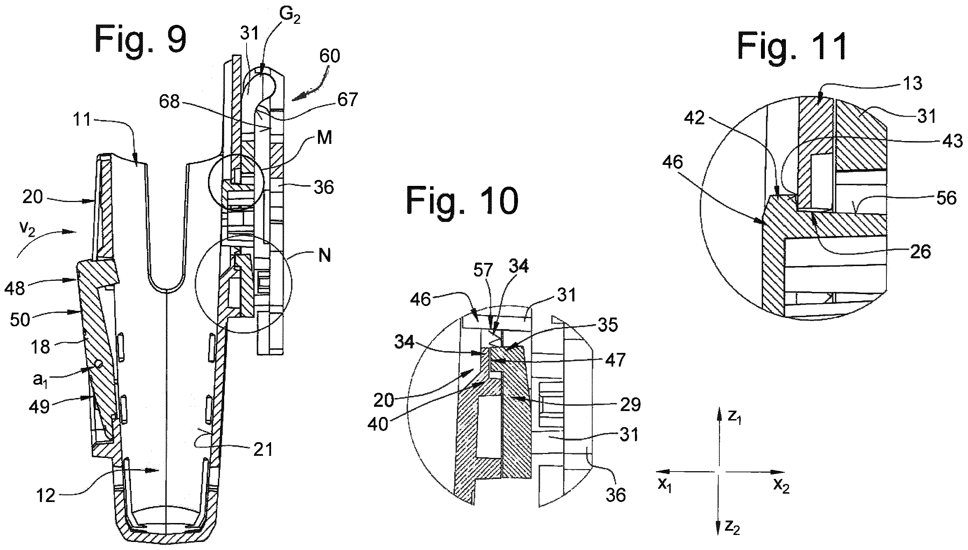

In den Fig. 10 und 11 sind Details der Haltevorrichtung 30 sowie der Verriegelungsvorrichtung 40 erkennbar. In Fig. 10 ist der Eingriff des Zahnvorsprungs 47 in eine Aussparung der Verzahnung 57 dargestellt. Die Verzahnungen 47 und 57 sind hier als Rastvorrichtung ausgebildet, so dass bei Überschreitung eines Mindest-Drehmoments auf die Aufnahmevorrichtung 20 in eine der Drehrichtungen p1 oder p2 der Zahnvorsprung 47 sich automatisch in Richtung x2 aus dem Eingriff mit der Verzahnung 57 bewegt und sich aufgrund der Rückstellkraft des Federstegs 29 in der eingestellten Drehposition mit der Verzahnung 57 in Eingriff bewegt. In Fig. 11 ist erkennbar, wie der Hakenvorsprung 42 die Randfläche 43 in der verrasteten Position lösbar übergreift.

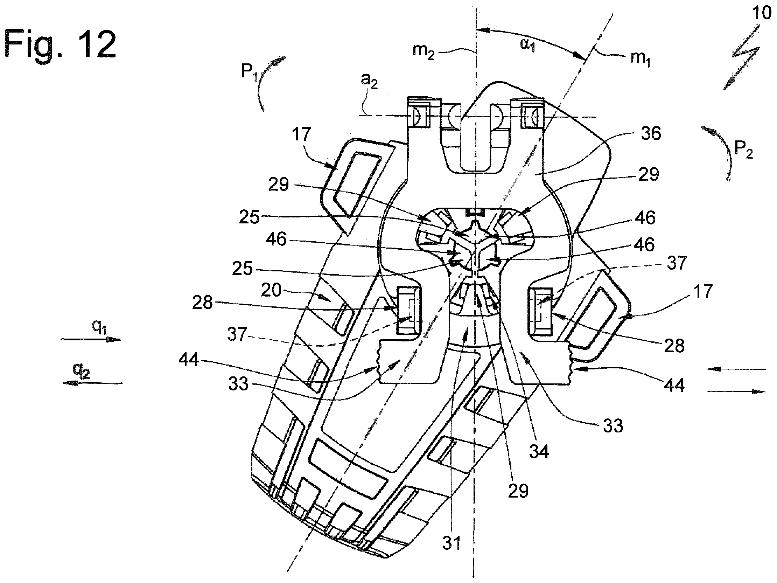

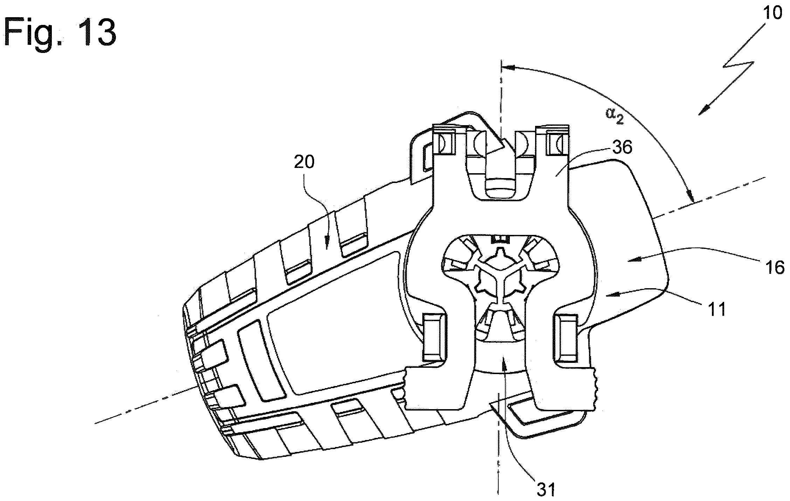

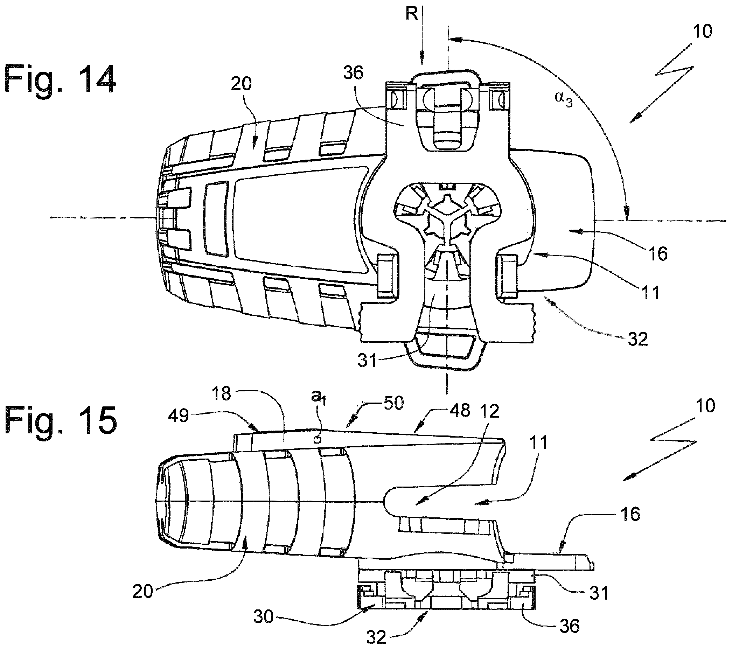

In den Fig. 12 bis 15 sind beispielhaft unterschiedliche Schwenkpositionen der Aufnahmevorrichtung 20 relativ zu dem Basisteil 31 dargestellt. In Fig. 12 ist zwischen einer Längsmittelachse m1 der Aufnahmevorrichtung 20 und einer Längsmittelachse m2 des Basisteils 31 ein Winkel α1 von ungefähr 30° ausgebildet. In Fig. 13 beträgt der Winkel α2 zwischen den Längsmittelachsen m1 und m2 etwa 70° und in Fig. 14 beträgt der Winkel α3 zwischen den Längsmittelachsen m1 und m2 etwa 90°.

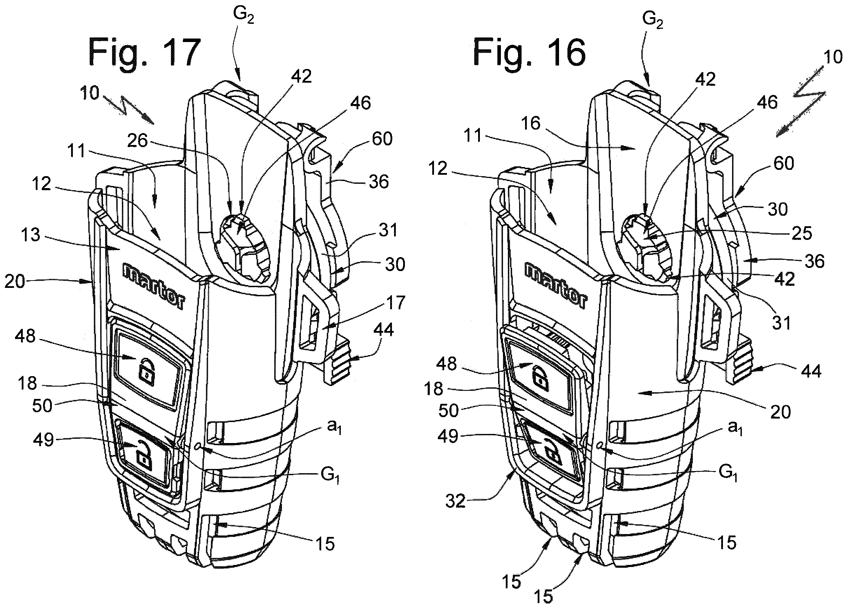

Nachfolgend wird die Sperrvorrichtung 50 erläutert, mit welcher die Entnahme des Messers 22, das in dem Aufnahmeraum 12 gehalten ist, verhindert werden kann. Die Sperrvorrichtung 50 umfasst die Taste 18 die um eine Schwenkachse a1 in die Schwenkrichtungen v1 und v2 schwenkbar gelagert ist. Die geometrische Schwenkachse a1 ist von einer physischen Achse 39 (lediglich in Fig. 4 erkennbar) gebildet, die in Achsaussparungen 41 der Aufnahmevorrichtung 20 gelagert ist und mit dieser ein Gelenk G1 bildet (siehe die Fig. 16 und 17).

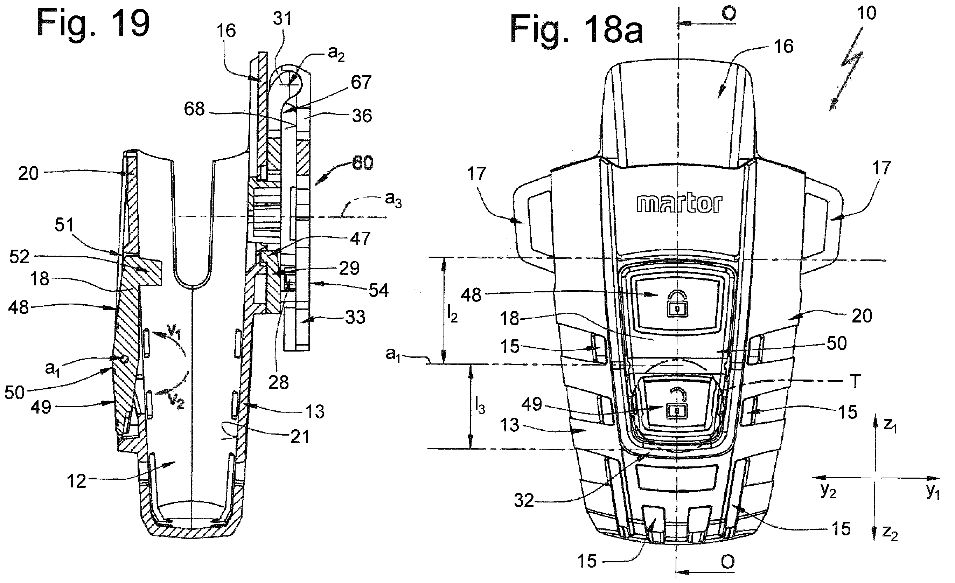

Die Taste 18 ist als zweiarmiger Hebel ausgebildet und weist gemäß Fig. 16 zwei Bereiche 48 und 49 auf, wobei sich der Bereich 48 oberhalb der Schwenkachse a1 und der Bereich 49 unterhalb der Schwenkachse a1 befindet. Die Betätigung 18 kann wippenartig durch einen Druck auf den jeweiligen Bereich 48 oder 49 zwischen einer Sperrstellung und einer Freigabestellung bewegt werden. Fig. 16 zeigt die Freigabestellung und Fig. 17 die Sperrstellung. In Fig. 18a ist die Tragvorrichtung in Frontansicht gezeigt, wobei sich die Sperrvorrichtung 50 in der Sperrstellung befindet. In Fig. 18a ist erkennbar, dass der Bereich 48 eine größere Längserstreckung I2 von der Schwenkachse a1 in Richtung z hat als der Bereich 49, der eine Längserstreckung I3 aufweist. Darüber hinaus ist der Bereich 48 mit einer größeren Fläche versehen, als der Bereich 49. Die Sperrstellung ist daher leichter einstellbar als die Freigabestellung.

Die Taste 18 ist von einem erhabenen Randsteg 76 eingefasst, wodurch sich diese haptisch absetzt und leicht ertastet werden kann, ohne anvisiert zu werden.

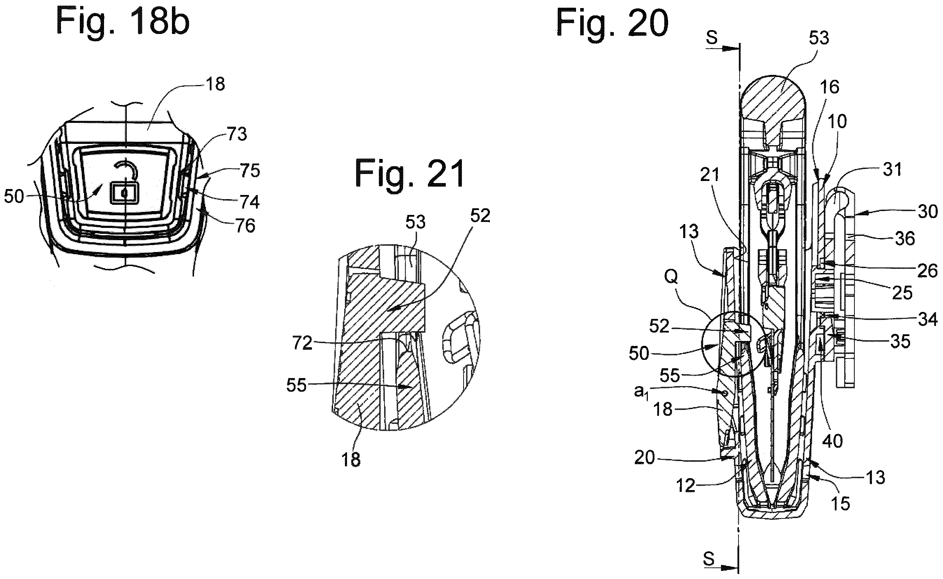

Die Taste 18 ist (siehe Fig. 18b) mit ersten Positionsmitteln 73 und das Gehäuse 32 mit zweiten Positionsmitteln 74 einer Positioniervorrichtung 75 versehen. Die ersten Positionsmittel 73 und / oder die zweiten Positionsmittel 74 sind z.B. elastisch ausgebildet. Die Taste 18 wird von den zusammenwirkenden ersten und zweiten Positionsmitteln 73 und 74 stabil in der Sperrstellung oder in der Freigabestellung gehalten, d.h. die Taste 18 verstellt sich nicht unbeabsichtigt in eine andere als die jeweils eingestellte Stellung. In der Sperrstellung und / oder in der Freigabestellung kann die Taste 18 z.B. einen bestimmten Bewegungsspielraum aufweisen.

Beispielsweise sind die ersten Positioniermittel 73 und zweiten Positioniermittel 74 von elastisch verformbaren Lippen gebildet, wobei sich die ersten Positioniermittel 73 in der Bewegungsbahn der zweiten Positioniermittel 74 befinden, wenn die Taste 18 zwischen der Sperrstellung und der Freigabestellung verstellt wird und durch elastische Verformung der Positioniermittel 73 und 74 überwunden werden können.

Zur Verstellung von der Freigabestellung in die Sperrstellung oder umgekehrt ist die Überwindung eines Totpunktes der ersten und zweiten Positioniermittel notwendig. Der Totpunkt ist eine Relativposition der ersten und zweiten Positioniermittel, in welchem die Taste weder in der Sperrstellung noch in der Freigabestellung, sondern genau dazwischen angeordnet ist.

In der Schnittansicht gemäß Fig. 19 ist erkennbar, dass ein Sperrstift 52 der Betätigung 18 in der Sperrstellung einen Durchbruch 51 der Wand 13 der Aufnahmevorrichtung 20 durchgreift und in den Aufnahmeraum 12 eingreift. Die Taste kann um die Achse a1 in die Richtungen v1 und v2 geschwenkt werden. In der Freigabestellung, die in der Schnittansicht gemäß Fig. 9 erkennbar ist, wurde die Taste 18 in Bezug auf die Position gem. Fig. 19 in Richtung v2 geschwenkt und der Sperrstift 52 ragt kaum in den Aufnahmeraum 12. Aus der Position gemäß Fig. 9 wird die Sperrstellung durch Schwenken in Richtung v1 erreicht.

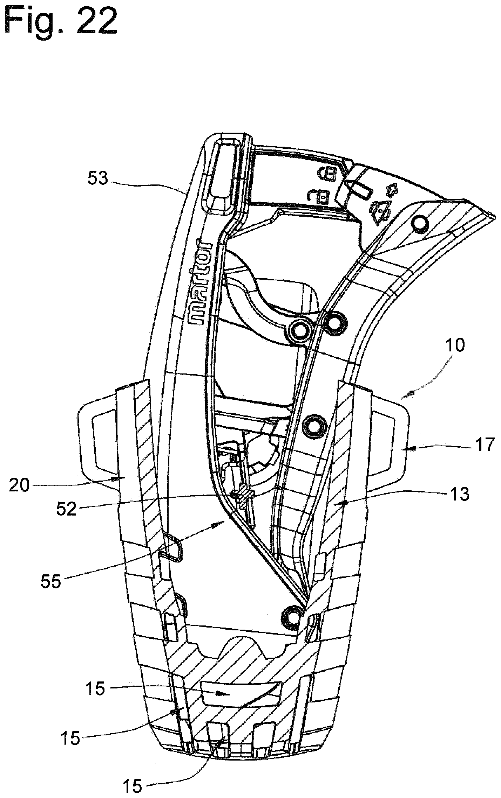

In den Fig. 19 bis 22 ist ersichtlich, dass sich der Sperrstift 52 in der Bewegungsbahn eines in dem Aufnahmeraum 12 aufgenommenen Messers 22 - hier einer Gehäusewand 55 des Messers 22 - befindet, wenn das Messer 22 in Richtung z2 bewegt wird. Eine Entnahme oder ein unbeabsichtigtes Herausfallen des Messers 22 ist daher unmöglich.

Alternativ könnte sich der Sperrstift 52 auch in Entnahmerichtung z1 in der Bewegungsbahn anderer Teile des jeweiligen Werkzeugs 22 befinden und die Entnahme aus dem Aufnahmeraum 12 so blockiert werden.

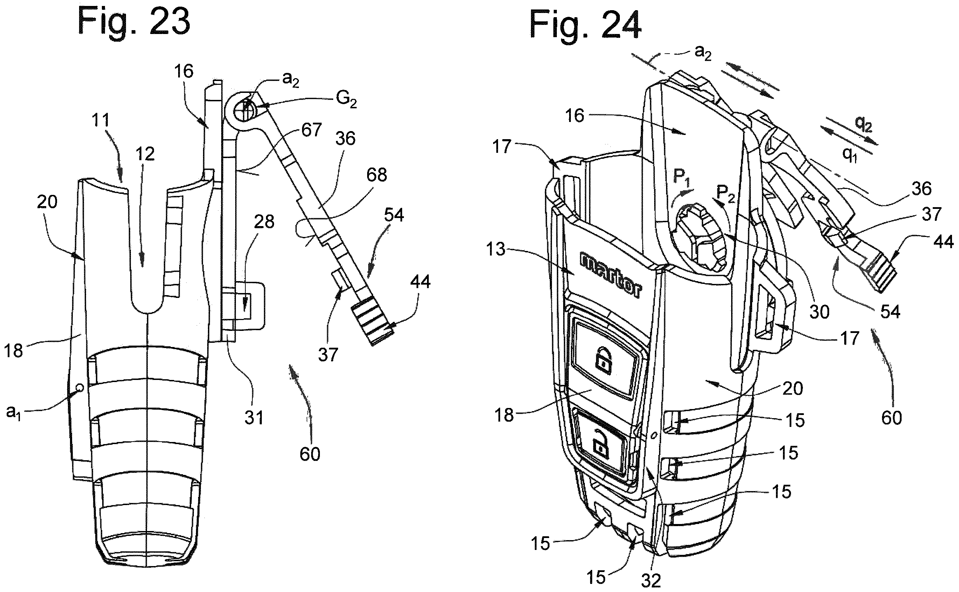

In Fig. 23 ist eine Seitenansicht der Tragvorrichtung 10 in Anlehnung an Fig. 2 dargestellt, wobei zur Befestigung der Tragvorrichtung 10 an einem Gürtel oder einem Steg eine Befestigungsvorrichtung 60 vorgesehen ist. Diese umfasst ein Schließteil 36, welches mit dem Basisteil 31 ein Schwenkgelenk G2 bildet. Das Basisteil 31 bildet dafür primäre Gelenkmittel 27 aus, die mit sekundären Gelenkmitteln 38 des Schließteils 36 zusammenwirken.

Ein freier Endbereich 54 des Schließteils 36 kann mittels des Schwenkgelenks G2 relativ zu dem Basisteil 31 um die Schwenkachse a2 von dem Basisteil 31 abgeschwenkt werden (siehe Fig. 23 und 24). Gemäß Fig. 23 wurde das Schließteil 36 von dem Basisteil 31 abgeschwenkt, so dass ein Tragteil z.B. ein Gürtel zwischen einer ersten Anlagefläche 67 des Basisteils 31 und einer zweiten Anlagefläche 68 des Schließteils 36 angeordnet werden kann. Die erste Anlagefläche 67 ist der zweiten Anlagefläche 68 zugewandt.

An dem Endbereich 54 weist das Schließteil 36 zwei elastisch verformbare Arme 33 auf, die jeweils mit einem Schließvorsprung 37 ausgebildet sind. Die Arme 33 sind derart elastisch entsprechend den Pfeilen q1 aufeinander zu bewegbar, dass die Schließvorsprünge 37 mittels Handhaben 44 aus dem Sperrverhältnis von Schließaussparungen 28 des Basisteils 31 herausbewegbar sind. Durch Entlastung der Handhaben 44 können sich die Riegelvorsprünge 37 aufgrund elastischer Rückstellkraft wieder entsprechend den Pfeilen q2 voneinander weg in Eingriff mit den Schließaussparungen 28 bewegen.

Es lässt sich auf diese Weise die Tragvorrichtung 10 z.B. an einem Gürtel oder an einem Steg sichern, indem dieser zwischen dem Basisteil 31 und dem Schließteil 36 angeordnet wird, das Schließteil 36 anschließend in Parallelstellung zu dem Basisteil 31 gebracht und danach die Schließvorsprünge 37 in Eingriff mit den Schließaussparungen 28 gebracht werden.

Alternativ könnte das Gelenk G2 auch als Folienscharnier ausgebildet sein, so dass das Basisteil 31 und das Schließteil 36 einteilig miteinander verbunden sind. Auch könnten alternativ das Schließteil 36 und das Basisteil 31 einteilig ausgebildet und durch einen elastischen Bereich verbunden sein, welcher das Gelenk G2 ersetzt. In diesem Fall wären das Basisteil 31 und das Schließteil 36 spangenartig verbunden und die Befestigungsvorrichtung würde keine Schließvorrichtung umfassend z.B. Schließvorsprung und Schließaussparung aufweisen.

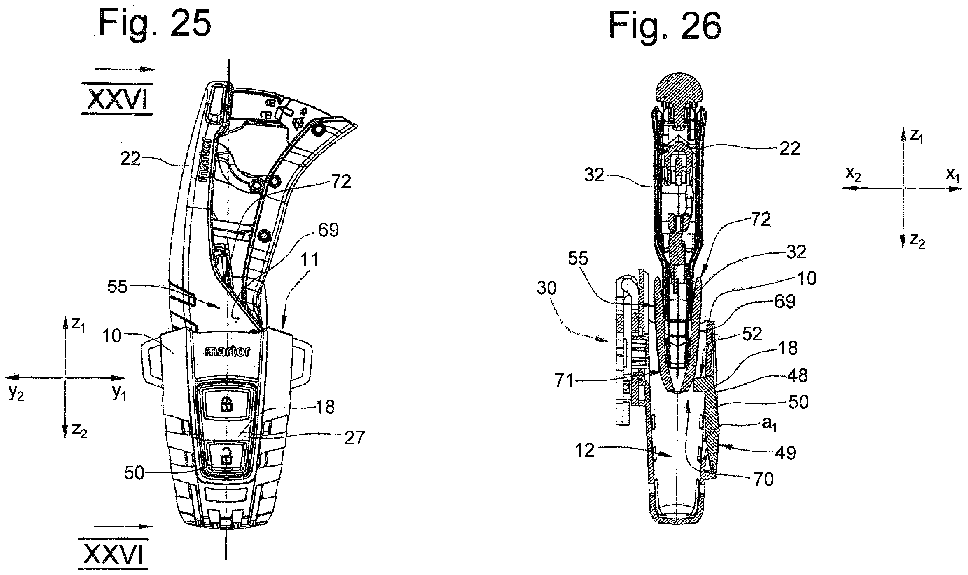

In den Fig. 25 bis 28 ist eine besondere Ausführungsform der Sperrvorrichtung 50 dargestellt. In diesem Ausführungsbeispiel ist eine Vorrichtung bestehend aus der erfindungsgemäßen Tragvorrichtung 10 und einem Messer 22 beschrieben. Die Tragvorrichtung 10 und das Messer 22 entsprechen in diesem Beispiel im Wesentlichen der bereits oben beschriebenen Tragvorrichtung 10 und dem beschriebenen Werkzeug 22. Bei dieser besonderen Ausführung bilden der Sperrstift 52 der Taste 18 und ein vorderer Bereich 71 einer Außenfläche 69 der Gehäusewand 55 eine Steuervorrichtung 70 zur Steuerung der Sperrvorrichtung 50.

in diesem Beispiel sind die Außenfläche 69 und der Sperrstift 52 derart ausgebildet, dass - wenn sich die Sperrvorrichtung 50 der Tragvorrichtung 10 in der Sperrstellung befindet und das Messer 22 gemäß Fig. 25 in Richtung z2 in den Aufnahmeraum 12 der Tragvorrichtung 10 eingeführt wird - die Sperrvorrichtung 50 in der Sperrstellung verbleibt.

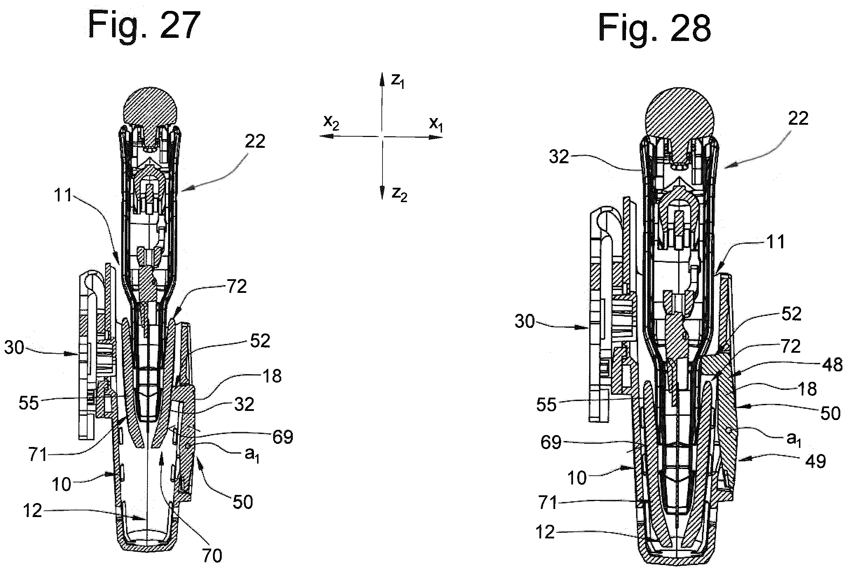

Wird das Messer 22 in Richtung z2 in den Aufnahmeraum 12 bewegt (siehe die Fig. 25 und 26), gerät der Sperrstift 52 in Kontakt mit der Außenfläche 69 der Gehäusewand 55. Die Außenfläche 69 ist derart geformt, dass sie die Taste 18 bei der Bewegung des Messers 22 relativ zu der Tragvorrichtung 10 in Richtung u1 schwenkt. Die Taste 18 wird dabei nur soweit in Richtung u1 geschwenkt (siehe Fig. 27), dass das Messer 22 den Sperrstift 52 passieren und sich in den Haltesitz der Tragvorrichtung 10 bewegen kann (siehe Fig. 28). Anschließend bewegt sich die Taste 18 in Richtung u2 zurück in die Sperrstellung. Mit anderen Worten, der Totpunkt der Positioniervorrichtung 75 wird nicht überschritten.

Gemäß Fig. 28 befindet sich das Messer 22 in dem Haltesitz und die Sperrvorrichtung 50 ist in der Sperrstellung angeordnet. Der Sperrstift 52 hintergreift gemäß Fig. 30 eine Kante 72 der Gehäusewand 55, so dass eine Bewegung des Messers 22 in Richtung z2, d.h. in Entnahmerichtung aus dem Aufnahmeraum, verhindert ist.

Gemäß einer alternativen Ausführung könnten der Sperrstift 52 und die Außenfläche 69 auch derart ausgebildet sein, dass sich die Sperrvorrichtung 50 in die Freigabestellung bewegt, wobei der Totpunkt überschritten wird, wenn das Messer 22 in den Haltesitz eingeführt wird.

Gemäß einer weiteren alternativen Ausführung oder zusätzlich zu den zuvor beschriebenen Merkmalen könnte die Steuervorrichtung 70 an der Taste 18 einen nicht dargestellten Vorsprung aufweisen, welche in Bezug auf die Schwenkachse a1 an einem dem Sperrstift 52 gegenüberliegenden Endbereich der Taste 18 angeordnet ist. Befindet sich die Sperrvorrichtung 50 in der Freigabestellung und das Messer 22 wird in den Aufnahmeraum 12 der Tragvorrichtung 10 eingeführt, gerät die Außenfläche 69 mit dem Vorsprung in Kontakt und bewegt die Taste 18 über den Totpunkt hinweg, so dass sich die Taste 18 in die Sperrstellung gemäß Fig. 30 bewegt, wenn sich das Messer 22 gemäß Fig. 30 in dem Haltesitz befindet.

## Patentansprüche

1. Tragvorrichtung (10) für ein Werkzeug (22) umfassend eine Aufnahmevorrichtung (20) mit einem Aufnahmeraum (12) zur Aufnahme des Werkzeugs (22) sowie mit einer Haltevorrichtung (30) zur Lagerung und Befestigung der Aufnahmevorrichtung (20) an einem Basisteil (31), **dadurch gekennzeichnet, dass** der Aufnahmevorrichtung (20) eine Sperrvorrichtung (50) mit ersten Sperrmitteln zugeordnet ist, die mittels einer Betätigung zwischen einer Sperrstellung und einer Freigabestellung bewegbar ist, mit welcher das Werkzeug (22) in der Tragvorrichtung (10) lösbar verriegelbar ist.

2. Tragvorrichtung (10) nach Anspruch 1, **dadurch gekennzeichnet, dass** die Betätigung eine Taste (18) umfasst, die wenigstens einen Betätigungsbereich (48, 49) aufweist, um die Sperrvorrichtung (50) zwischen der Sperrstellung und der Freigabestellung zu bewegen.

3. Tragvorrichtung (10) nach Anspruch 1, **dadurch gekennzeichnet, dass** die Taste (18) zwei Betätigungsbereiche (48, 49) aufweist, wobei einem Betätigungsbereich (48) die Sperrstellung und dem anderen Betätigungsbereich (49) die Freigabestellung zugeordnet ist.

4. Tragvorrichtung (10) nach einem der vorangehenden Ansprüche, **dadurch gekennzeichnet, dass** die Taste (18) durch translatorische Verlagerung und / oder durch Rotation zwischen der Sperrstellung und der Freigabestellung bewegbar ist.

5. Tragvorrichtung (10) nach Anspruch 1, **dadurch gekennzeichnet, dass** die Taste (18) in wenigstens eine erste stabile Position und eine zweite stabile Position bewegbar ist, wobei der ersten Position die Sperrstellung und der zweiten Position die Freigabestellung zugeordnet ist.

6. Tragvorrichtung (10) nach einem der vorangehenden Ansprüche, **dadurch gekennzeichnet, dass** die Taste (18) in der Sperrstellung und / oder in der Freigabestellung verrastbar ist.

7. Tragvorrichtung (10) nach einem der vorangehenden Ansprüche, **dadurch gekennzeichnet, dass** die Taste (18) als zweiarmiger Hebel ausgebildet ist, wobei zwei Betätigungsbereiche (48, 49) durch eine Schwenkachse (a1) voneinander getrennt sind.

8. Tragvorrichtung (10) nach einem der vorangehenden Ansprüche, **dadurch gekennzeichnet, dass** ein erster Betätigungsbereich (48) in Bezug auf einen zweiten Betätigungsbereich (49) größer ausgebildet ist.

9. Tragvorrichtung (10) nach einem der vorangehenden Ansprüche, **dadurch gekennzeichnet, dass** die Taste (18) mit den ersten Sperrmitteln (52) physisch oder funktionell verbunden ist, welche wenigstens bereichsweise in eine Bewegungsbahn des Werkzeugs (22) bewegbar sind und ein Herausbewegen des Werkzeugs (22) aus der Aufnahmevorrichtung (20) verhindern.

10. Tragvorrichtung (10) nach einem der vorangehenden Ansprüche, **dadurch gekennzeichnet, dass** die Aufnahmevorrichtung (20) haptische Erkennungsmittel aufweist, um die Anordnung der Taste (18) durch Ertasten lokalisieren zu können.

11. Tragvorrichtung (10) nach einem der vorangehenden Ansprüche, **dadurch gekennzeichnet, dass** das Werkzeug (22) als Messer ausgebildet ist oder ein Messer umfasst.

12. Vorrichtung umfassend eine Tragvorrichtung (10) nach einem der vorangehenden Ansprüche sowie ein Werkzeug (22) **dadurch gekennzeichnet, dass** die ersten Sperrmittel beim Einführen des Werkzeugs in den Aufnahmeraum (12) mit einer Außenfläche (69) des Werkzeugs (22) zusammenwirken, um eine Steuervorrichtung (70) zu bilden, mit welcher die Sperrvorrichtung (50) steuerbar ist.

13. Vorrichtung nach Anspruch 12, **dadurch gekennzeichnet, dass** dass die ersten Sperrmittel und die Außenfläche derart ausgebildet sind, dass beim Einführen des Werkzeugs in den Aufnahmeraum (12) die Sperrvorrichtung (50) in der Sperrstellung verbleibt und das Werkzeug (22) verriegelt wird, wenn sich die Sperrvorrichtung (50) in der Sperrstellung befindet.

14. Vorrichtung nach Anspruch 12 oder 13, **dadurch gekennzeichnet, dass** die ersten Sperrmittel und die Außenfläche derart ausgebildet sind, dass beim Einführen des Werkzeugs in den Aufnahmeraum (12) die Sperrvorrichtung (50) in die Sperrstellung bewegt und das Werkzeug (22) verriegelt wird, wenn sich die Sperrvorrichtung (50) in der Freigabestellung befindet.

15. Vorrichtung nach Anspruch 12, **dadurch gekennzeichnet, dass** die ersten Sperrmittel und die Außenfläche derart ausgebildet sind, dass beim Einführen des Werkzeugs in den Aufnahmeraum (12) die Sperrvorrichtung (50) aus der Sperrstellung in die Freigabestellung verstellt wird.
